# EUROPEAN PATENT SPECIFICATION

(11) **EP 3 353 259 B1**
(45) Date of publication and mention of the grant of the patent: **29.01.2020**
(21) Application number: 16782310.3
(22) Date of filing: 22.09.2016
(51) Int. Cl.: C09K 3/10, C08G 18/83, C08K 5/00, C08K 5/13, C08K 5/132

(54) **SILYL MODIFIED POLYMER SEALANT**
SILYLMODIFIZIERTES POLYMERDICHTUNGSMITTEL
MATÉRIAU D'ÉTANCHÉITÉ POLYMÈRE MODIFIÉ PAR DU SILYLE

(30) Priority: 23.09.2015 NL 2015495
(43) Date of publication of application: 01.08.2018
(73) Proprietor: Strongbond B.V., 7091 CM Dinxperlo (NL)
(72) Inventor: TINNEVELT, Christiaan Johan Gerard, 7091 CM Dinxperlo (NL); BOUWMAN, Erik, 7091 CM Dinxperlo (NL); WENNEKES, WilcoBernardus, 7091 CM Dinxperlo (NL); DE BLOCK, Ruud, 7091 CM Dinxperlo (NL)
(74) Representative: Vogels, Leonard Johan Paul
(86) International application number: PCT/NL2016/050656
(87) International publication number: WO 2017/052373

(56) References cited:
- US-A1- 2007 213 459
- US-A1- 2008 015 327
- US-A1- 2013 197 141

## Description

### FIELD OF THE INVENTION

The present invention is in the field of an improved silyl modified terminated polymer used in a sealant, typically a kit, and especially in combination with specific anti-oxidants. The sealant may be used in various applications, such as in building and construction, industry, transportation solar energy, marine, waterproofing and so on.

### BACKGROUND OF THE INVENTION

Silyl modified polymers (SMPs), also referred to as modified-silane polymers, relate to so-called silane (also referred to as silyl) terminated polymers. This is a special class of polymers, polymers being large molecules having many repetitive units in a middle and long section thereof, which have as an end group of the long middle section, also referred to as a terminating group, a silyl type molecule. SMPs are main components in solvent-free sealant and adhesive products. These products are typically (iso)cyanate free. Sealant products manufactured with silyl modified polymers have good characteristics, such as adhesion on a wide range of substrate materials, and have good temperature and UV resistance. This makes these products applicable in a wide range of applications.

The silyl modified polymers can be formed using relatively simple chemistry techniques. On application the products, such as an SMP sealant, cure from a liquid or gel state to a solid. Curing entails cross-linking by the hydrolysis of silyl ethers. Cross-linking improves certain characteristics of the final material.

The present invention makes use of a specific type of polymer, such as known as Kaneka's MS Polymer™ and other silyl-terminated polymers. Its unique properties enable MS Sealant (the sealant based on Kaneka MS Polymers) to deliver outstanding performances for a large variety of markets such as construction, industry, transportation, flooring, waterproofing, DIY and many others. As a middle section it contains a functionalized polyether backbone with methoxysilane terminal groups. It provides excellent performances and makes MS Polymer-based products unique and beneficial.

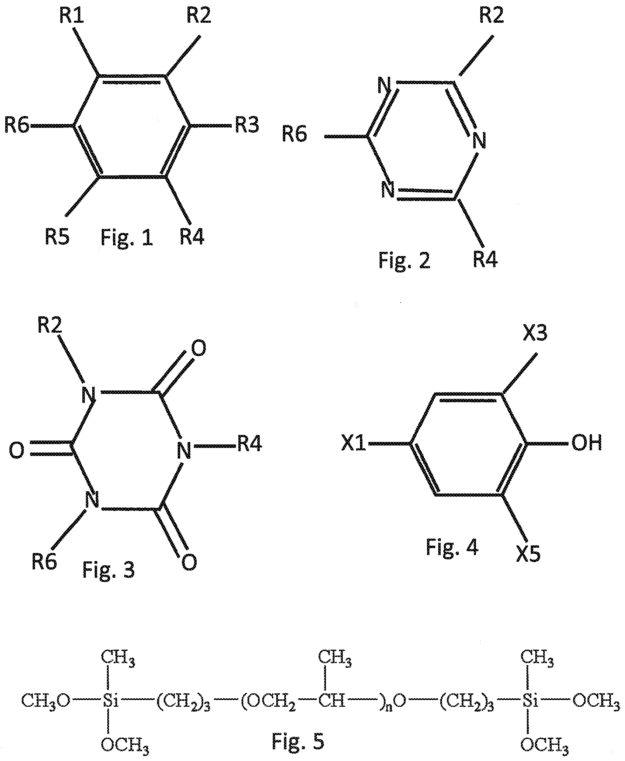

A broad range of MS Polymer™ grades are available. These may differentiate in degree of functionalization (number and nature of groups attached to the backbone) and backbone structure in a wide viscosity range. Typically a dimethoxysilyl terminated polyether (DMS MS, fig. 5) or trimethoxysilyl terminated polyether (TMS MS) is used.

An approach for sealants is formulated in US2013/0197141 A. Therein certain sealants with anti-oxidants are recited which can not be used under harsh conditions. In addition always at least a specific combination of at least one compound of general formula II (without thioether) and at least one compound of general formula III (with thioether) is required, and then a synergistic effect of these compounds is claimed to occur, which results in the curable compositions having an improved long-term temperature resistance of cured material. It has been found that especially formula III compounds cause problems, which can at the best be partly alleviated by compounds according to formula II; in any case the compositions are found to lack sufficient storage stability.

US 2008/015327 A1 recites acid catalyzed systems (e.g. by sulphonic acids). In addition a stabilizer is required, such as C₁₈-S-C₁₈. Such a stabilizer would not be considered in sealants, as the odor of the stabilizer is not appreciated. The catalyzed system are found to come with many drawbacks, as identified in the description. In view of typically applied fillers in sealants, such as Ca-containing fillers, acids can not be used; typically sealants do not cure when an acid, such as sulphonic acid, is present. In addition the systems tend to clog upon formulation thereof when combining with an unsuited antioxidants.

US 2007/213459 A1 relates to antioxidants in general and may be regarded as background art in this respect. It is noted that many of the antioxidants mentioned are not suited for the present invention, especially in view of storage stability for sealants. 2013/197141 A1 discloses a curable composition for improving temperature stability of sealants comprising silyl-terminated polyethers in combination with at least two phenol based antioxidants.

For demanding applications, such as where sealants may be prone to oxidation, such as high temperatures, high levels of radiation and such, the characteristics of the above sealants are found to be insufficient.

It is therefore an object of the present invention to provide a MS sealant which functions better for given purposes, without jeopardizing functionality and advantages.

### SUMMARY OF THE INVENTION

The present invention relates to an improved modified silyl terminated polymer sealant according to claim 1, and a use thereof according to claim 11. In particular the addition and use of another very specific anti-oxidant solved the above problem in application of MS-sealants, such as on a rooftop, the roof of a vehicle or other places where the sealant is exposed to higher than ambient temperatures for prolonged times. The present sealant is typically free from solvents and (iso)cyanates. It has also been found that the storage and long term stability of the present sealant has improved. There is at the most a slight odor. In addition the present sealant does not clog and cures well.

Substantive research had to be carried out in order to further improve functionality and characteristics. Recently and surprisingly it has been found that a small group of anti-oxidants give a far superior protection against oxidants, UV, radiation and aging compared to the anti-oxidants applied in the prior art. This is found useful in demanding applications where sealants may be prone to oxidation, such as high temperatures, high levels of radiation, and such.

For all the components described below a single component (one), or a combination of similar components (two or more) may be used.

The main component of the sealant is a modified silyl terminated polymer. This polymer is present in an amount of 10 - 60 wt.%, based on a total weight of the sealant. It is preferred to use 20 - 50 wt.% polymer, such as 30-45 wt.%, e.g. 35-44 wt.%.

As a further component a filler is used in an amount of 10 - 50 wt.%, preferably 20 - 45 wt.%, more preferably 30 - 40 wt.%.

As an optional component a plasticizer is added in an amount of 0-30 wt.%, preferably 1-20 wt.%, more preferably 2-15 wt.%, even more preferably 3-10 wt.%, such as 4-7 wt.%.

Additives may be added in an amount of 0-15 wt.%, preferably 1-10 wt.%, more preferably 2-8 wt.%, even more preferably 3-7 wt.%, such as 4-6 wt.%.

The invention is mainly characterized by a specific selection of an anti-oxidant, according to fig. 1, fig. 2 or fig. 3, respectively, in combination with the silyl modified polymer. The anti-oxidant is present in an amount of 0.05-5 wt.%, preferably 0.1-4 wt.%, more preferably 0.2-3 wt.%, even more preferably 0.3-2.5 wt.%, such as 0.5-2 wt.%, e.g. 1-1.5 wt.%; in principle also a combination of the present antioxidants may be used, with a total weight thereof in the above range(s). The ring structure of figs. 1-3 comprises at least one phenol according to fig. 4 attached thereto, and preferably one or three phenols according to fig. 4. In figs. 1-2 R1, R3, and R5 are independently selected from H, methyl and ethyl, i.e. relatively short alkyl groups or hydrogen, and in figs. 1-3 R2, R4, and R6, are independently selected from H, C₁-C₁₀ linear or branched alkyl, the alkyl optionally containing a heteroatom selected from O, N, S, and fig. 4, with the proviso that at least one of R2, R4, and R6 is a structure according to fig. 4. X1 typically is a bridging group between the benzene ring of fig. 1, 2 or 3, respectively, and the phenol group of fig. 4, selected from methylene, sulfur, and amine. X3 and X5 are independently selected from branched and linear C₁-C₇-alkyls, such as C₂, C₃ and C₄-alkyls. The alkyls are typically un-substituted. As indicated the X1, X3 and X5 are on the 1, 3 and 5 position of the benzene ring, respectively, and the alcohol group of fig. 4 is on the 4-position. Surprisingly out of a large number of antioxidants tested only these types of species functions properly in terms of long term anti-oxidant action, without deterioration of other characteristics of the MS sealant.

The anti-oxidant can be applied in relatively small amounts. It is now possible to apply silyl modified sealants under harsh conditions.

Thereby the present invention provides a solution to one or more of the above mentioned problems.

Advantages of the present description are detailed throughout the description.

### DETAILED DESCRIPTION OF THE INVENTION

The present invention relates in a first aspect to a sealant according to claim 1.

In an exemplary embodiment of the present sealant one or three of R2, R4 and R6 are independently selected from fig. 2. So R2 and R4, R4 and R6, R2 and R6, or all of R2, R4 and R6 are according to fig. 4. It has been found that the higher the number of moieties according to fig. 4 is present in the anti-oxidant according to the invention, the better the performance is.

In an exemplary embodiment of the present sealant X3 and X5 are independently selected from methyl, ethyl, propyl, isopropyl, butyl, isobutyl, tert-butyl, and 2-isopentyl, preferably from propyl, isopropyl, butyl and tert-butyl, most preferably tert-butyl.

In an exemplary embodiment of the present sealant R1, R3 and R5 are methyl, R2, R4 and R6 are independently selected from fig. 4, X1 is methylene, amine, or sulfur, X3 is tert-butyl, and X5 is tert-butyl.

In an exemplary embodiment of the present sealant R1, R3 and R5 are methyl.

In an exemplary embodiment of the present sealant R2, R4 and R6 are independently selected from fig. 4.

In an exemplary embodiment of the present sealant X1 is methyl, wherein X3 is tert-butyl, and X5 is tert-butyl.

In an exemplary embodiment of the present sealant the filler is selected from chalk, precipitated chalk, coated precipitated chalk, silica, carbon black, and combinations thereof. It preferably is a calcium carbonate based composition.

In an exemplary embodiment of the present sealant the plasticizer is selected from benzoates, phthalates, terephthalates, polyols, such as polypropylene glycol (PPG), hydrogenated versions of phthalates, terephthalates, and benzoates, and combinations thereof. In view of toxicity polyols, terephthalates and benzoates are preferred. Examples of suitable terephthalates are dibutyl terephthalate, dipropyl terephthalate, and dipentyl terephthalate. Examples of suitable benzoates are mono-esters from benzoic acid and a C₈-C₁₆ alcohol, preferably wherein the alcohol is a C₉-C₁₁ alcohol, preferably a C₁₀ alcohol. Suitable polyols are PPG-2000, PPG 1000, and PPG2500.

In the present sealant the additives are selected from catalysts, rheology control agents, pigments, pigment pastes, HALS, UV stabilizers, adhesion promotors, drying agents, and combinations thereof.

In an exemplary embodiment of the present sealant the polymer comprises a functionalized polyether backbone. The molecular weight average mass of the polymer is from 2000-50000 Da.

In an exemplary embodiment of the present sealant the polyether backbone comprises methoxysilane terminal groups, typically at both ends, each comprising 1-3 methoxy-groups, typically two or three methoxy-groups.

In an exemplary embodiment of the present sealant the modified silane polymer comprises one or more -An-D-SiXYZ end groups, wherein A is a divalent linking group comprising at least one hetero atom, such as S,N,O,P, and Si, preferably O. D is a divalent hydrocarbon residue with 1-12 C-atoms, preferably 2-8 carbons, such as 3, 4, 5 or 6 carbon atoms. X, Y, Z are each independently substituents on the Si atom. They are independently selected from C₁-C₈ alkyl, C₁-C₈ alkoxy, C₁-Cs acyloxy, preferably C₂-C₅ alkyl, C₂-C₅ alkoxy, and C₂-C₅ acyloxy. At least one of the substituents X, Y, Z is a C₁-C₈ alkoxy or C₁-C₈ acyloxy. And further n is 0 or 1.

In an exemplary embodiment of the present sealant A is selected from oxygen, -NR'-, amide, carbamate, urea, imino, carboxylate, carbamoyl, amidino, and carbonate, wherein R'=H or C₁-C₄ alkyl, preferably oxygen or -NH-.

In an exemplary embodiment of the present sealant D is selected from alkyl residues, such methyl, ethyl, and n-propyl.

In an exemplary embodiment of the present sealant the polymer is selected from at least one of MS-polymers™, dimethoxysilyl terminated polyether, trimethoxysilyl terminated polyether, S203H, S303H,S227, S327, SAX 220, SAX 260, SAX350, SAX400, SAT010, SAX015, SAX115, SAT145, MAX602, MAX923, MAX951, SAX750, SAX510, SAX520, SAX 530, SAX540, SAX580, SAX590, MAX 451, MAX 480, MAX850; Desmoseal®, for example S XP 2458, S XP 2636, S XP 2749, S XP 2774, S XP 2821; Geniosil® for example STP-E10, STP-E15, STP-E30, STP-E35, Evonik Polymer for example ST47, ST 48, ST 77, ST 61, ST 61 LV, ST 81, ST 80 and TEGOPAC®, for example Seal 100, Bond 150, and Bond 250

In a second aspect the present invention relates to a use of the present sealant for sealing or bonding joints in buildings, such as homes, sheds, factories, offices, and high rise buildings, road-infrastucture, such as viaducts, bridges, and fly-overs, transport vehicles, such as cars, trucks, busses, trains, vans, motorhomes, caravans, and trailers, ships, such as yachts, ships, and boats, or for improving storage and long term stability.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### SUMMARY OF FIGURES

Figs. 1-3 show core structures of the present antioxidant.
Fig. 4 shows the present anti-oxidant moiety.
Fig. 5 shows an example of a silyl modified polymer, namely dimethoxysilyl terminated polyether.
Fig. 6 shows the degradation time in hours plotted versus the time in days at 40 °C for prior art anti-oxidants.
Fig. 7a shows exemplary anti-oxidants according to the invention.
Fig. 7b shows exemplary prior art anti-oxidants.
Fig. 8 shows the degradation time in hours plotted versus the time in days at 40 °C.
Fig. 9 shows aging results.

### EXAMPLES/EXPERIMENTS

The invention although described in detailed explanatory context may be best understood in conjunction with the accompanying examples and figures.

### General formula & comparative examples

**Table 1. MS-kits.**

| nr | Raw material | Standard | Comparative example 1a-b | | Comparative example 2a-d | | | |
|---|---|---|---|---|---|---|---|---|
| 1 | MS-polymer 303H | 100 | 100 | 100 | 100 | 100 | 100 | 100 |
| 2 | Plasticizer DIUP | 50 | 50 | 50 | 50 | 50 | 50 | 50 |
| 3 | PPC (precipitated calciumcarbonate) | 120 | 120 | 120 | 120 | 120 | 120 | 120 |
| 4 | TiO2 (Tronox RFK-2) | 20 | 20 | 20 | 20 | 20 | 20 | 20 |
| 5 | Crayvallac SLX | 5 | 5 | 5 | 5 | 5 | 5 | 5 |
| 6 | Dynasylan VTMO | 2 | 2 | 2 | 2 | 2 | 2 | 2 |
| 7 | Dynasylan DAMO | 1,5 | 1,5 | 1,5 | 1,5 | 1,5 | 1,5 | 1,5 |
| 8 | Tegokat 226 | 1,5 | | 1,5 | 1,5 | 1,5 | 1,5 | 1,5 |
| 9 | Antioxidant 1) | 1 | 1 | 1 | | | | |
| 10 | 4-Dodecylbenzenesulfonic acid | | 15 | 15 | | | | |
| 11 | Dodecylsulfide | | | | 5 | 15 | 5 | 15 |
| 12 | Irganox 1135 | | | | 1 | 1 | | |

### 1) The antioxidant may be chosen from table 3.

All ingredients except the Tegokat are added to a Hauschild cup and mixed in a Hauschild mixer for 60 seconds. Than the catalyst is added and mixed for another 30 seconds. Additionally UV- and light stabilizers, pigments etc. may be added in the first or second step.

### Comparative example 1a and 1b

Instead of a tin-catalyst 4-dodecylbenzenesulfonic acid was added but no cure was observed. After addition of a tin catalyst the cure behaved as without 4-dodecylbenzenesulfonic acid. This shows 4-odeculsulfonic acid has no activity in this system

### Comparative example 2 a - d

Up to 5% dodecylsulfide was added to a standard mix with and without Irganox 1135. No change in oxidation resistance was found compared to the standard mixture with or without Irganox 1135 not containing dodecylsulfide. This shows addition of sulfides have no effect in this system.

### Aging tests

Two polymer-types have been tested in a kit: an MS-polymer of Kaneka (1-3) and an STP of Evonik (4-6).

**Table 2: compositions 1-6; amounts are in gr.**

| | | | 1 | 2 | 3 | | 4 | 5 | 6 |
|---|---|---|---|---|---|---|---|---|---|
| Kaneka MS Polymer | | | 115,55 | 115,55 | 115,55 | | | | |
| Evonik ST47 | | | | | | | 115,51 | 115,51 | 115,51 |
| Irganox 1035 | | | 0,46 | 0,23 | | | 0,46 | 0,23 | |
| Irganox 1330 | | | | 0,23 | 0,46 | | | 0,23 | 0,46 |
| Filler | | | 112,11 | 112,11 | 112,11 | | 112,11 | 112,11 | 112,11 |
| Other additives | | | 19,95 | 19,95 | 19,95 | | 19,95 | 19,95 | 19,95 |
| Total | | | 248,07 | 248,07 | 248,07 | | 248,03 | 248,03 | 248,03 |

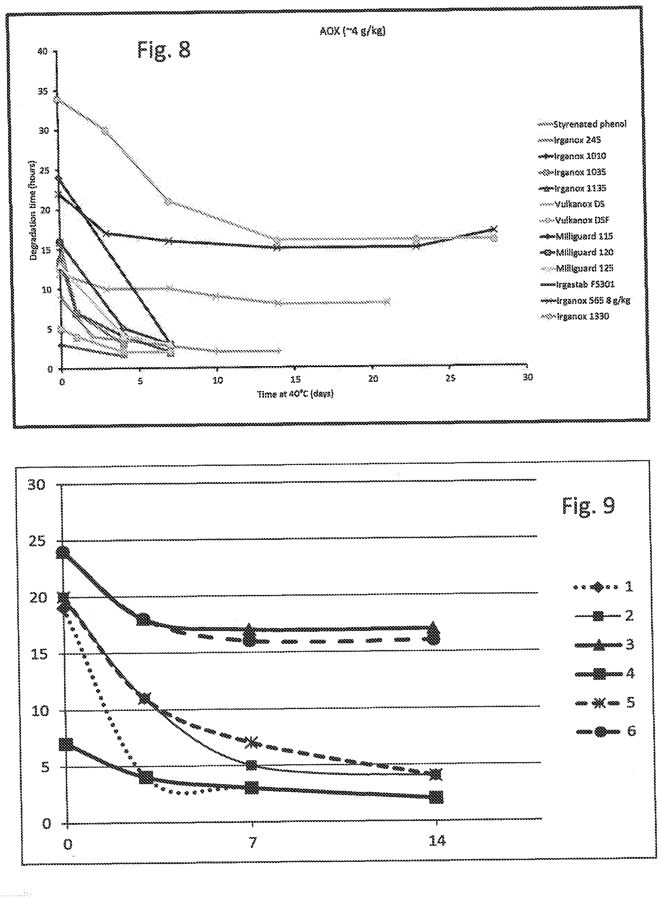

To these kits "state of the art" anti-oxidants have been provided, either a 50%/50% mixture (2 and 5) with the present antioxidant, and as a comparison (prior art) 100% of only one antioxidant (Irganox 1035 according to the prior art, 1 and 4) and only one antioxidant of the present anti-oxidant only (3 and 6). These compositions have been tested at slightly elevated temperature (T (40°C); at given intervals the thermal stability expressed in hours was determined; the moment when degradation was observed, at given intervals of observations, was considered to be the time up to which the sealant was stable. In fig. 9 the results are plotted. From the figure it is clear that the compositions according to the invention (3 and 6, respectively) remain stable up to the end of the test period (14 days), compositions comprising two antioxidants of which is one according to the invention have a slightly improved stability, but not sufficient at all (2 and 5 respectively), whereas compositions having only one antioxidant according to the prior art perform totally insufficient (1 and 4 respectively).

### Example 1:

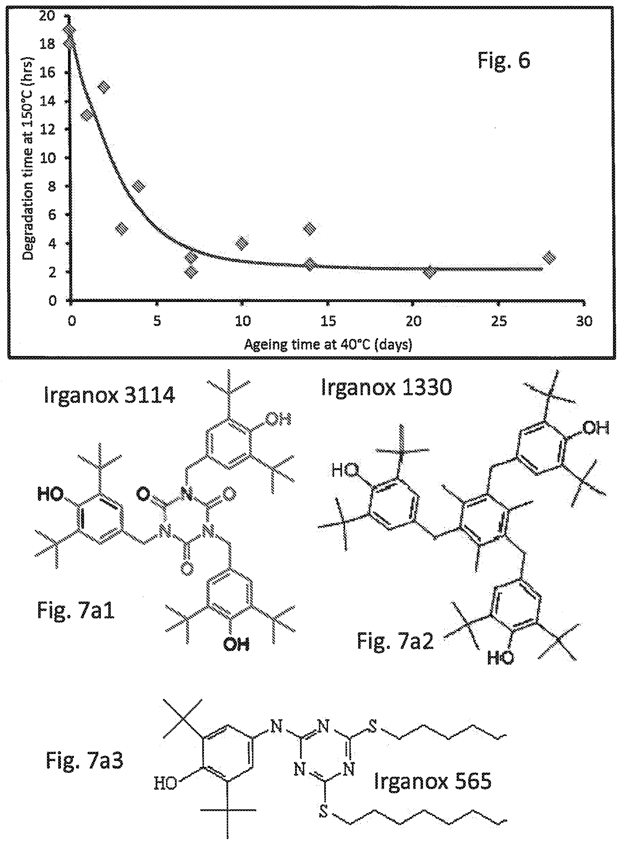

In fig.6 the degradation time in hours at 150°C is plotted versus the time in days prior to cure at 40°C. On the horizontal axis the time the sealant was stored at 40°C before cure in days is given, showing the storage stability of the anti-oxidant, and on the vertical axis the time in hours to degradation at 150°C, showing the effectiveness of the anti-oxidant after storage of the sealant. This test may be seen as a stress test for both storage stability of the sealant as subsequent oxidation stability. The line represents the present situation using Irganox 1135 commonly applied in the sealant. The degradation time decreases rapidly upon storing the uncured sealant.

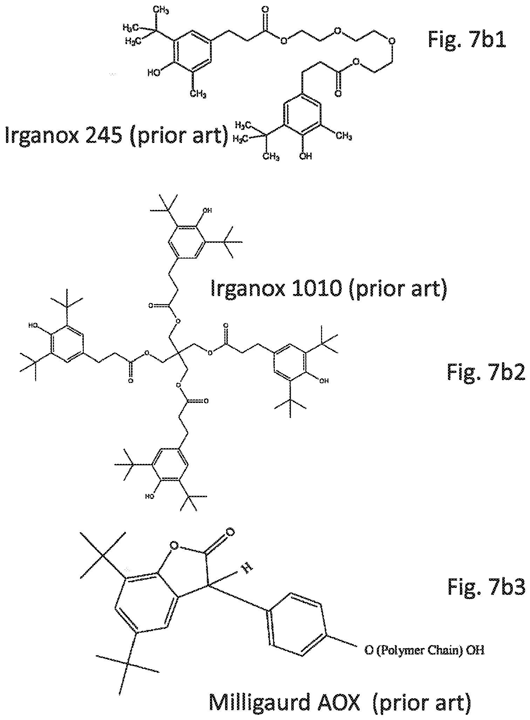

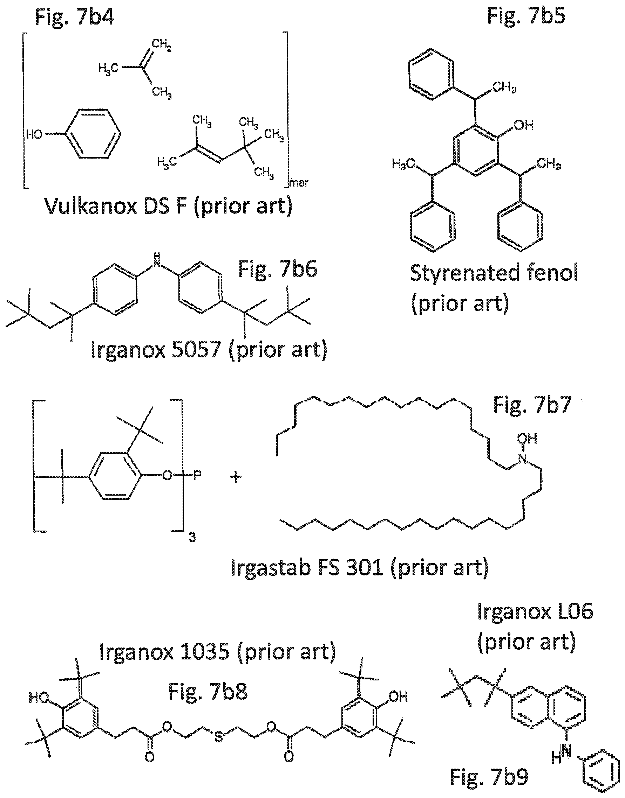

In addition to Irganox 245 (2 g/kg sealant)also Irganox 565, Irganox 1010, Irganox 1035, Irganox 1135 (16 g/kg sealant), Irganox 1135 (4 g/kg), Irganox 1330, Vulkanox DS (F), Milliguard 115, Milliguard 120, Milliguard 125, and Irgastab FS301 were tested. Most of these compounds are represented in fig. 7 or from analogues thereof.

In fig. 8 a similar test as in fig. 6 is performed with the above mentioned anti-oxidants. Most of the anti-oxidants fail, as can be seen from rapidly decreasing curves. Only Irganox 5057 (top line) and Irganox L06 perform sufficient. In summary all tested phenols, except for the prior art styrenated phenol, all Milliguards, and most Irganox anti-oxidants fail.

**In table 3 a summary is given.**

| Commercial name antioxidant | Type | Molecular weight | Initial degradation Time (h) | Degradation time after 7 days @ 40°C (h) | Relative decrease degradation time after 7days @ 40°C (%) |
|---|---|---|---|---|---|
| Styrenated Phenol | phenol | appr. 300 | 12 | 10 | 83 |
| Irganox 1330 | phenol | 775 | 34 | 21 | 62 |
| Irganox 565 | phenol hybrid | 589 | 16 | 9 | 56 |
| Irgastab FS 301 | phosphite and hydroxylamine | mixture | 3 | 1,5 | 50 |
| Vulkanox DS | phenol | appr. 200 | 5 | 2 | 40 |
| Vulkanox DSF | phenol | appr. 200 | 5 | 2 | 40 |
| Milliguard 120 | lactone | appr. 321 | 13 | 3 | 23 |
| Milliguard 125 | lactone | appr. 321 | 13 | 3 | 23 |
| Irganox 245 | phenol | 587 | 9 | 2 | 22 |
| Milliguard 115 | lactone | appr. 321 | 16 | 3 | 19 |
| Irganox 1135 | phenol | 390 | 14 | 2 | 14 |
| Irganox 1010 | phenol | 1178 | 24 | 3 | 13 |
| Irganox 1035 | phenol hybrid | 643 | 16 | 2 | 13 |

At present samples have been tested of a commercial STP (or SMP) sealant containing Irganox 1035, Irganox 1330 and a mixture thereof. The total antioxidant content of all samples is 4 g/kg STP polymer. The samples are stored in an oven at 40°C. The degradation times are determined at 150°C as a function of storage time. Furthermore, tensile tests are performed directly and after dumbbells used in said tests are exposed to 100°C for 1000 hours. This is done on freshly prepared sealants and sealants that have been stored at 40°C for 4 weeks. From the table it is clear that the present anti-oxidants perform much better compared to prior art ones used; note that the styrenated phenol is no longer used.

## Claims

1. Sealant consisting of
10 - 60 wt.% of a silyl modified polymer,
10 - 50 wt.% of filler,
0 - 30 wt.% of a plasticizer,
0 - 15 wt.% additives, wherein the additives are selected from catalysts, rheology control agents, pigments, pigment pastes, HALS, UV stabilizers, adhesion promotors, drying agents, and combinations thereof,
**characterized in**
wherein the polymer comprises a functionalized polyether backbone with methoxysilane terminal groups, and 0.05 - 5 wt.% of an anti-oxidant, to a total of 100 wt.%, wherein the anti-oxidant comprises a moiety according to fig. 4, 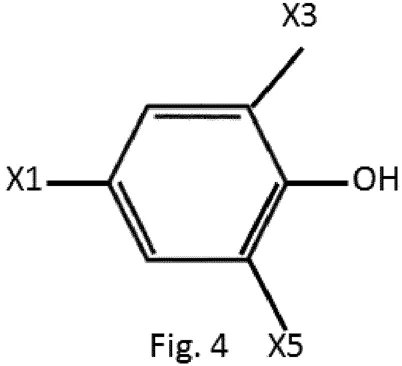 the anti-oxidant further comprising a core structure according to figure 1, figure 2, or figure 3 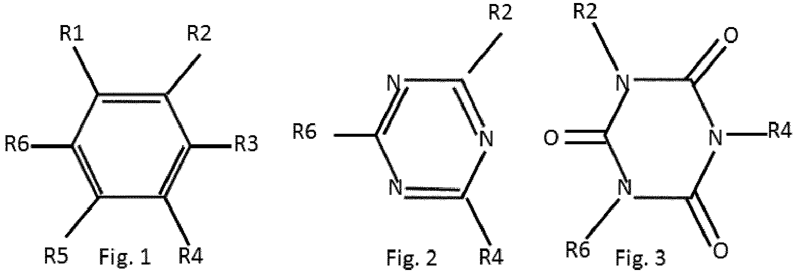
wherein R1, R3, and R5 are independently selected from H, methyl and ethyl,
and wherein R2, R4, R6, are independently selected from H, C₁-C₁₀ linear or branched alkyl, the alkyl optionally containing a heteroatom selected from O, N, S, and fig. 4, with the proviso that at least one of R2, R4, and R6 is a structure according to fig. 4,
wherein X1 is a bridging group attached to the core structure of fig. 1, fig. 2 or fig. 3, respectively, and wherein X1 is selected from methylene, sulfur, and amine, and X3 and X5 are independently selected from branched and linear C₁-C₇-alkyls,
wherein all wt.% are relative to a total weight of the sealant.

2. Sealant according to any of the preceding claims, wherein one or three of R2, R4 and R6 are independently selected from fig. 4.

3. Sealant according to any of the preceding claims, wherein X3 and X5 are independently selected from methyl, ethyl, propyl, isopropyl, butyl, isobutyl, tert-butyl, and 2-isopentyl.

4. Sealant according to any of the preceding claims, wherein R1, R3 and R5 are methyl, wherein R2, R4 and R6 are independently selected from fig. 4, wherein X1 is methylene, amine, or sulfur, wherein X3 is tert-butyl, and X5 is tert-butyl.

5. Sealant according to any of the preceding claims, wherein the filler is selected from chalk, precipitated chalk, coated precipitated chalk, silica, carbon black, and combinations thereof.

6. Sealant according to any of the preceding claims, wherein the plasticizer is selected from benzoates, phthalates, terephthalates, polyols, hydrogenated versions of phthalates, terephthalates and benzoates, and combinations thereof.

7. Sealant according to any of the preceding claims, wherein-the modified silyl polymer comprises one or more -AnD-SiXYZ end groups wherein:
A is a divalent linking group comprising at least one hetero atom,
D is a divalent hydrocarbon residue with 1-12 C-atoms,
X, Y, Z are each independently substituents on the Si atom, and are independently selected from C₁-C₈ alkyl, C₁-C₈ alkoxy, C₁-C₈ acyloxy, and wherein at least one of the substituents X, Y, Z is a C₁-C₈ alkoxy or C₁-C₈ acyloxy, and
n is 0 or 1,

8. Sealant according to any of the preceding claims, wherein A is selected from oxygen, -NR'-, amide, carbamate, urea, imino, carboxylate, carbamoyl, amidino, and carbonate, wherein R'=H or C₁-C₄ alkyl, preferably oxygen or -NH-.

9. Sealant according to any of the preceding claims, wherein D is selected from alkyl residues, such methyl, ethyl, and n-propyl.

10. Sealant according to any of the preceding claims, wherein the polymer is selected from at least one of modified sylil-polymers, dimethoxysilyl terminated polyether, and trimethoxysilyl terminated polyether.

11. Use of a sealant according to any of claims 1-10 for sealing or bonding joints in buildings, such as homes, sheds, factories, offices, and high rise buildings, road-infrastucture, such as viaducts, bridges, and fly-overs, transport vehicles, such as cars, trucks, busses, trains, vans, motorhomes, caravans, and trailers, ships, such as yachts, ships, and boats, or for improving storage stability.

## Patentansprüche

1. Dichtungsmittel bestehend aus
10 - 60 Gew.-% eines silylmodifizierten Polymers,
10 - 50 Gew.-% Füllstoff,
0 - 30 Gew.-% eines Weichmachers,
0 - 15 Gew.-%.% Additive, wobei die Additive aus Katalysatoren, Rheologiekontrollmitteln, Pigmenten, Pigmentpasten, HALS, UV-Stabilisatoren, Haftvermittlern, Trocknungsmitteln und Kombinationen derselben ausgewählt sind,
**dadurch gekennzeichnet,**
**dass** das Polymer ein funktionalisiertes Polyethergerüst mit Methoxysilan-Endgruppen umfasst, und
0,05 - 5 Gew.-% eines Antioxidans bezogen auf insgesamt 100 Gew.-% umfasst, wobei das Antioxidans eine Einheit gemäß Fig. 4 umfasst, 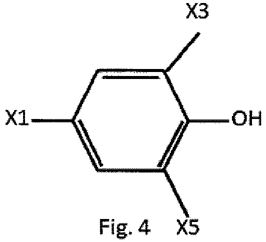 wobei das Antioxidans ferner eine Kernstruktur gemäß Figur 1, Figur 2 oder Figur 3 umfasst, 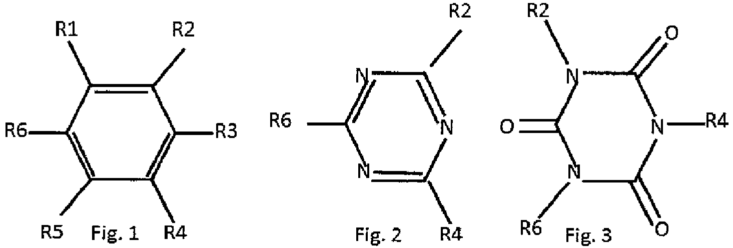
worin R1, R3 und R5 unabhängig voneinander aus H, Methyl und Ethyl ausgewählt sind,
und worin R2, R4, R6 unabhängig voneinander ausgewählt sind aus H, C₁-C₁₀ linearem oder verzweigtem Alkyl, wobei das Alkyl optional ein Heteroatom enthält ausgewählt aus O, N, S, und Figur 4, mit der Maßgabe, dass mindestens eines von R2, R4, und R6 eine Struktur gemäß Fig. 4 ist,
wobei X1 eine Brückengruppe ist, die an die Kernstruktur von Fig. 1, Fig. 2 bzw. Fig. 3 gebunden ist, und wobei X1 ausgewählt ist aus Methylen, Schwefel und Amin, und X3 und X5 unabhängig ausgewählt sind aus verzweigten und linearen C₁-C₇-Alkylen, wobei alle Gew.-% bezogen auf ein Gesamtgewicht des Dichtungsmittels sind.

2. Dichtungsmittel nach einem der vorhergehenden Ansprüche, worin einer oder drei von R2, R4 und R6 unabhängig voneinander aus Fig. 4 ausgewählt sind.

3. Dichtungsmittel nach einem der vorhergehenden Ansprüche, worin X3 und X5 unabhängig voneinander ausgewählt sind aus Methyl, Ethyl, Propyl, iso-Propyl, Butyl, iso-Butyl, tert-Butyl und 2-Isopentyl.

4. Dichtungsmittel nach einem der vorhergehenden Ansprüche, worin R1, R3 und R5 Methyl sind, worin R2, R4 und R6 unabhängig voneinander ausgewählt sind aus Fig. 4, worin X1 Methylen, Amin oder Schwefel ist, worin X3 tert-Butyl ist und X5 tert-Butyl ist.

5. Dichtungsmittel nach einem der vorhergehenden Ansprüche, worin der Füllstoff ausgewählt ist aus Kreide, gefällter Kreide, beschichteter gefällter Kreide, Siliziumdioxid, Ruß und Kombinationen davon.

6. Dichtungsmittel nach einem der vorhergehenden Ansprüche, worin der Weichmacher ausgewählt ist aus Benzoaten, Phthalaten, Terephthalaten, Polyolen, hydrierten Versionen von Phtalaten, Terephthalaten und Benzoaten und Kombinationen davon.

7. Dichtungsmittel nach einem der vorhergehenden Ansprüche, worin das modifizierte Silylpolymer eine oder mehrere An-D-SiXYZ-Endgruppen umfasst, worin:
A eine zweiwertige Verbindungsgruppe ist, die mindestens ein Heteroatom umfasst,
D ein zweiwertiger Kohlenwasserstoffrest mit 1-12 C-Atomen ist,
X, Y, Z jeweils unabhängig voneinander Substituenten am Si-Atom sind, und unabhängig voneinander aus C₁-C₈-Alkyl, C₁-C₈-Alkoxy, C₁-C₈-Acyloxy ausgewählt sind, und worin mindestens einer der Substituenten X, Y, Z ein C₁-C₈-Alkoxy oder C₁-C₈-Acyloxy ist, und n 0 oder 1 ist.

8. Dichtungsmittel nach einem der vorhergehenden Ansprüche, worin A ausgewählt ist aus Sauerstoff, -NR'-, Amid, Carbamat, Harnstoff, Imino, Carboxylat, Carbamoyl, Amidino und Carbonat, worin R'=H oder C₁-C₄-Alkyl, vorzugsweise Sauerstoff oder -NH- ist.

9. Dichtungsmittel nach einem der vorhergehenden Ansprüche, worin D ausgewählt ist aus Alkylresten, wie Methyl, Ehtyl und n-Propyl.

10. Dichtungsmittel nach einem der vorhergehenden Ansprüche, worin das Polymer ausgewählt ist aus mindestens einem der modifizierten Silylpolymere, Polyether mit Dimethoxysilyl-Endgruppen, und Polyether mit Trimethoxysilyl-Endgruppen.

11. Verwendung eines Dichtungsmittels nach einem der Ansprüche 1-10 zum Abdichten oder Verkleben von Fugen in Gebäuden, wie Häusern, Schuppen, Fabriken, Büros und Hochhäusern, Straßeninfrastrukturen, wie Viadukte, Brücken und Überführungen, Transportfahrzeuge, wie Autos, Lastkraftwagen, Busse, Züge, Vans, Wohnmobile, Wohnwagen und Anhänger, Schiffe, wie Yachten, Schiffe und Boote, oder zur Verbesserung der Lagerstabilität.

## Revendications

1. Matériau d'étanchéité consistant en
10 à 60 % en poids d'un polymère à modification silyle,
10 à 50 % en poids d'une charge,
0 à 30 % en poids d'un plastifiant,
0 à 15 % en poids d'additifs, lesquels additifs sont choisis parmi les catalyseurs, les agents régulateurs de rhéologie, les pigments, les pâtes de pigment, les HALS, les stabilisants UV, les promoteurs d'adhérence, les agents siccatifs, et leurs combinaisons,
**caractérisé en ce que**
dans lequel le polymère comprend une charpente de polyéther fonctionnalisé avec des groupes terminaux méthoxysilane, et
0,05 à 5 % en poids d'un antioxydant, pour un total de 100 % en poids, lequel antioxydant comprend un fragment selon la Figure 4, 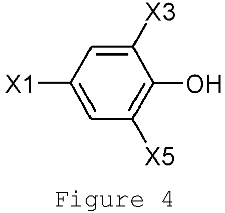 l'antioxydant comprenant en outre une structure de cœur selon la Figure 1, la Figure 2 ou la Figure 3 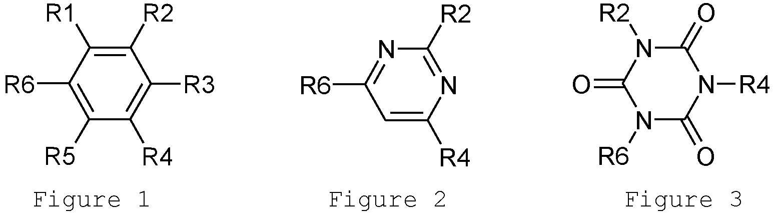
où R1, R3 et R5 sont indépendamment choisis parmi H, méthyle et éthyle,
et où R2, R4 et R6 sont indépendamment choisis parmi H, un alkyle linéaire ou ramifié en C₁ à C₁₀, l'alkyle contenant éventuellement un hétéroatome choisi parmi O, N, S et la Figure 4, sous réserve qu'au moins l'un parmi R2, R4 et R6 soit une structure selon la Figure 4,
où X1 est un groupe pontant rattaché à la structure de cœur de la Figure 1, la Figure 2 ou la Figure 3, respectivement, et où X1 est choisi parmi le méthylène, le soufre et une amine, et X3 et X5 sont indépendamment choisis parmi un alkyle en C₁ à C₇ linéaire ou ramifié,
tous les pourcentages en poids étant rapportés au poids total du matériau d'étanchéité.

2. Matériau d'étanchéité selon la revendication précédente, dans lequel un ou trois parmi R2, R4 et R6 sont indépendamment choisis parmi la Figure 4.

3. Matériau d'étanchéité selon l'une quelconque des revendications précédentes, dans lequel X3 et X5 sont indépendamment choisis parmi méthyle, éthyle, propyle, isopropyle, butyle, isobutyle, tert-butyle et 2-isopentyle.

4. Matériau d'étanchéité selon l'une quelconque des revendications précédentes, dans lequel R1, R3 et R5 sont méthyle, dans lequel R2, R4 et R6 sont indépendamment choisis parmi la Figure 4, dans lequel X1 est le méthylène, une amine ou le soufre, dans lequel X3 est tert-butyle, et dans lequel X5 est tert-butyle.

5. Matériau d'étanchéité selon l'une quelconque des revendications précédentes, dans lequel la charge est choisie parmi la craie, la craie précipitée, la craie précipitée enrobée, la silice, le noir de carbone, et leurs combinaisons.

6. Matériau d'étanchéité selon l'une quelconque des revendications précédentes, dans lequel le plastifiant est choisi parmi les benzoates, les phtalates, les téréphtalates, les polyols, les versions hydrogénées des phtalates, téréphtalates et benzoates, et leurs combinaisons.

7. Matériau d'étanchéité selon l'une quelconque des revendications précédentes, dans lequel le polymère à modification silyle comprend un ou plusieurs groupes terminaux -An-D-SiXYZ dans lesquels :
A est un groupe de liaison divalent comprenant au moins un hétéroatome,
D est un résidu hydrocarboné divalent de 1 à 12 atomes C,
chacun de X, Y et Z est indépendamment un substituant sur l'atome Si, et est indépendamment choisi parmi alkyle en C₁ à C₈, alcoxy en C₁ à C₈, acyloxy en C₁ à C₈, et au moins l'un des substituants X, Y et Z est un alcoxy en C₁ à C₈ ou un acyloxy en C₁ à C₈, et
n vaut 0 ou 1.

8. Matériau d'étanchéité selon l'une quelconque des revendications précédentes, dans lequel A est choisi parmi l'oxygène, -NR'-, amide, carbamate, urée, imino, carboxylate, carbamoyle, amidino, et carbonate, où R' = H ou un alkyle en C₁ à C₄, de préférence parmi l'oxygène et -NH-.

9. Matériau d'étanchéité selon l'une quelconque des revendications précédentes, dans lequel D est choisi parmi les résidus d'alkyle, tels que méthyle, éthyle et n-propyle.

10. Matériau d'étanchéité selon l'une quelconque des revendications précédentes, dans lequel le polymère est au moins l'un choisi parmi les polymères à modification silyle, un polyéther à terminaison diméthoxysilyle, et un polyéther à terminaison triméthoxysilyle.

11. Utilisation d'un matériau d'étanchéité selon l'une quelconque des revendications 1 à 10 pour sceller ou coller des raccords dans des constructions, telles que des domiciles, des hangars, des usines, des bureaux, et des gratte-ciels, des infrastructures routières, telles que des viaducs, des ponts, et des passages supérieurs, des véhicules de transport, tels que des voitures, des camions, des bus, des trains, des vans, des camping-cars, des caravanes, et des remorques, des navires, tels que des yachts, des navires et des bateaux, ou pour améliorer la stabilité au stockage.
